# EUROPÄISCHE PATENTSCHRIFT

(11) **EP 0 971 157 B1**
(45) Veröffentlichungstag und Bekanntmachung des Hinweises auf die Patenterteilung: **26.02.2003**
(21) Anmeldenummer: 99113192.1
(22) Anmeldetag: 08.07.1999
(51) Int. Cl.: F16H 7/02, F16G 1/28

(54) **Aus Synchronriemen und Synchronscheibe bestehende formschlüssige Antriebsanordnung**
Positive driving arrangement comprising timing belt and sprocket
Système d'entrainement positif comprenant courroie et poulie dentées

(30) Priorität: 09.07.1998 DE 19830681
(43) Veröffentlichungstag der Anmeldung: 12.01.2000
(73) Patentinhaber: ContiTech Antriebssysteme GmbH, 30165 Hannover (DE)
(72) Erfinder: Göser, Hubert, 29451 Dannenberg (DE); Aue, Rüdiger, 29451 Dannenberg (DE); Winkler, Thomas, 29451 Dannenberg (DE); Pfannschmidt, Andreas, 29451 Dannenberg (DE)
(74) Vertreter: Schneider, Egon

(56) Entgegenhaltungen:
- EP-A- 0 571 887
- DE-B- 1 172 086
- DE-C- 3 233 891
- FR-A- 2 686 959
- US-A- 2 091 958
- US-A- 2 770 977

## Beschreibung

### Stand der Technik

Aus Synchronriemen und Synchronscheibe(n) bestehende, formschlüssige Antriebsanordnungen mit auf der Lauffläche des Synchronriemens quer zur Laufrichtung angeordneten, die gesamte Breite des Synchronriemens einnehmenden Stegen und mit entsprechenden, auf der zugeordneten Scheibe befindlichen Nuten entsprechend dem Oberbegriff des Anspruchs 1, sind als Zahnriementriebe bekannt.

Zur Führung solcher Zahnriemen ist es erforderlich, beidseitig sogenannte Bordscheiben an den zugeordneten Zahnscheiben anzubringen.
Die Anbringung von Bordscheiben ist mit zusätzlichem Aufwand und zusätzlichen Kosten verbunden. Außerdem benötigt man für die Anbringung von Bordscheiben einen zusätzlichen Bauraum. Lässt der Bauraum nur eine beschränkte Breite zu, so geht die für die Bordscheiben erforderliche Breite zu Lasten der für die Leistungsübertragung verbleibenden Breite des Antriebsriemens.

Um auch ohne Verwendung von Bordscheiben eine hinreichende seitliche Führung zu erhalten, schlägt die US-PS 2,770,977 vor, auf dem Synchronriemen eine Längsrippe und auf der zugeordneten Synchronscheibe mindestens eine entsprechende Ringnut vorzusehen. Durch einen derartigen Aufbau ist aber effektiv kein Gewinn an Breite erzielt, da die Breite der Längsrippe/Ringnut der wirksamen Breite der in Eingriff stehenden Riemenzähne verloren geht, so dass bei gleicher Breite insgesamt nur eine geringere Leistung übertragen werden kann.

Die DE 32 33 891 C1 beschreibt einen Zahnriementrieb, insbesondere für Erntemaschinen. Die Riemenzähne weisen eine gleichschenklig trapezförmige Grundfläche auf, deren kleine und große Basisseiten im Wechselspiel parallel zu den Seitenkanten des bandförmigen Riemenantriebs verlaufen. Die entsprechenden Riemenscheiben sind mit Zahnmulden ausgestaltet, die wechselweise keine Seitenbegrenzung aufweisen, um zwischen Förderriemen und/oder Riemenräder gelangten Teilen des Erntegutes und/oder Erdbrocken praktisch ein ungehindertes seitliches Herausfließen zu ermöglichen.

Die gattungsgemässe amerikanische Patentschrift 2,091,958 beschreibt ein Motorboot mit einem endlosen Antriebsriemen. Die innere Oberfläche dieses Antriebsriemens ist mit quer angeordneten, sägezahnförmigen Rippen versehen, die zusammen eine Art Fischgrätmuster bilden und die mit entsprechenden Rippen oder Zähnen von Rollen in Eingriff stehen (siehe dort Fig. 8). Die Herstellung derartiger Riemen und derartiger Rollen erfordert in jeder Ausdehnungsrichtung eine große Präzision, was mit beträchtlichen Herstellungskosten verbunden ist.
Da die thermischen Ausdehnungskoeffizienten von Riemen und Rollen in starkem Maße voneinander differieren, ergeben sich beim Betreiben der Riemen/Rollen-Anordnung Beschädigungen an denn Sägezahnspitzen der Riemen, wodurch eine zuverlässige Funktion, insbesondere präzise Führung des Riemens nicht mehr gewährleistet ist.

### Aufgabe

Die Aufgabe der vorliegenden Erfindung besteht darin, eine aus Synchronriemen und Synchronscheibe bestehende formschlüssige Antriebsanordnung zu beschreiben, die selbstführend ist und wobei - bei Meidung der genannten Mängel - die gesamte Breite der Anordnung für die Leistungsübertragung zur Verfügung steht.

### Lösung und Vorteile der Erfindung

Mit der in Anspruch 1 offenbarten Erfindung ist eine Riemen/Scheiben-Anordnung geschaffen worden, die einerseits selbstführend ist und andererseits synchrone Leistungsübertragung über die gesamte Breite der Anordnung ermöglicht. Es wird die volle Breite der Riemen/Scheiben-Kombination zum synchronen Antrieb benutzt. Auf Bordscheiben zur Seitenführung kann verzichtet werden.

Die Verzahnung ist nicht - wie herkömmlich - mit 90°-Winkel zur Laufrichtung ausgeprägt sondern jeweils in einem gleichen Winkel α zur Axialrichtung, welcher von Zahn zu Zahn spiegelbildlich ausgebildet ist (alternierende Anordnung).
Der Winkel α ergibt sich aus der mathematischen Beziehung tan α = b'/B (b' = seitlicher Versatz des Zahns bezogen auf die Riemenorthogonale, B = Riemenbreite). Für unterschiedliche Zahnriemenbreiten können sich unterschiedliche maximale Winkel α ergeben. Die dazugehörige Zahnscheibe weist konjugierte Nuten auf, die ebenfalls einen Winkelversatz von ± α aufweisen.

Wegen der abwechselnden Neigung der Riemenzähne stellt sich ein proportional zur Querkraft wechselnder Formschluss ein. Es sind stets mehrer Riemenzähne mit entsprechenden Scheibennuten im formschlüssigen Eingriff, so dass eine Selbstführung resultiert.

Durch diese Selbstführung ist ein axiales Ablaufen des Zahnriemens von der Scheibe nicht mehr möglich. Nicht in Umlaufrichtung resultierende Kraftkomponenten werden innerhalb von zwei Zähnen kompensiert. Deshalb sind Bordscheiben oder andere Führungshilfen nicht mehr notwendig (Kostenersparnis, raumökonomisch).

Verglichen mit den sonst üblichen Zahnriementrieben mit parallelen Zähnen ergibt die erfindungsgemäße Anordnung eine verringerte Polygonwirkung (Rattern), da der Zahneingriff über einen größeren Umfangswinkel stattfindet.

Durch vermiedene Polygonität (Schwingungsanregung) und kontinuierliches Einzahnen wird die Luftverdrängung und das Aufschlaggeräusch vermindert. Für ein polygonfreies Abrollen gilt b' ≥ b (b = Zahnbreite). Dabei muss über die Zahnriemenbreite B betrachtet mindestens ein Zahnversatz um die Größe einer Zahnfußbreite gewährleistet sein.

Darüber hinaus ist der erfindungsgemäße Riemen (z. B. verglichen mit pfeilverzahnten und bogenverzahnten Riemen) nicht laufrichtungsgebunden.

Durch eine Optimierung der konstruktiven Details, wie sie in den Unteransprüchen beschrieben sind, lässt sich das Antriebssystem weiter verbessern.
Die Zähne des erfindungsgemäßen Riemens können im Querschnitt bekannten geometrischen Profilen entsprechen.

In vorteilhafter Ausgestaltung der Erfindung weist der Synchronriemen eine Verstärkungseinlage aus Cord oder Gewebe auf. Dadurch erhöht sich die allgemeine Zugfestigkeit des Riemens.

Anwendungsbereiche sind: Antriebstechnik, Transporttechnik und Lineartechnik.

### Zeichnungen

Anhand der beigefügten Zeichnungen wird ein Ausführungsbeispiel erläutert:
Fig. 1 zeigt den erfindungsgemäßen Riemen in Draufsicht;
Fig. 2 zeigt denselben Riemen in Seitenansicht;
Fig. 3 zeigt einen Riemenabschnitt in perspektivischer Sicht;
Fig. 4 zeigt in perspektivischer Sicht die entsprechende Zahnscheibe;
Fig. 5a zeigt ebenfalls in perspektivischer Sicht einen erfindungsgemäßen Riemen/Scheiben-Antrieb;
Fig. 5b zeigt die geometrische Umkehrung dieses Antriebs.

### Beschreibung

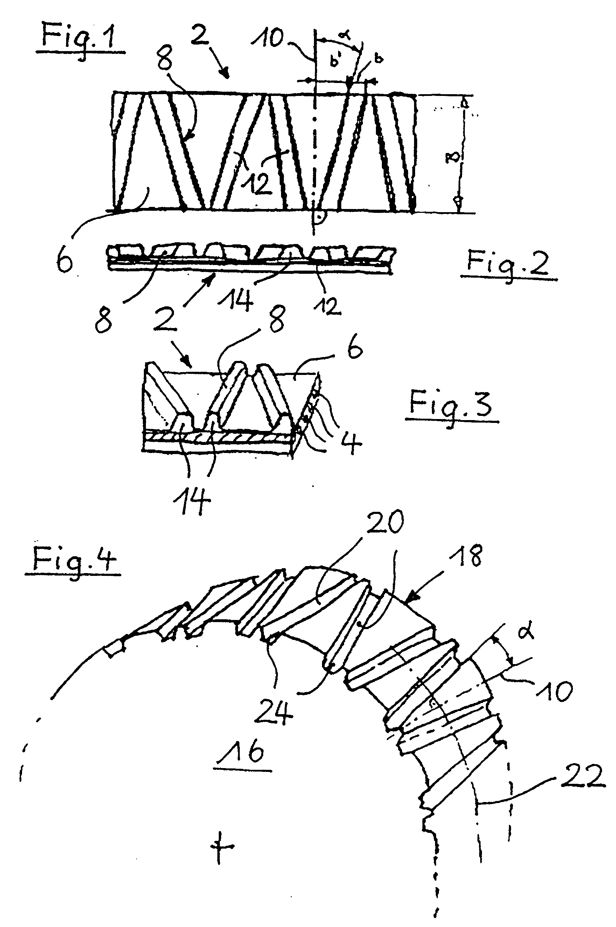

Der in Fig. 1 dargestellte kurze Abschnitt eines erfindungsgemäßen Synchronriemens 2 besteht vorzugsweise aus Polyurethan und ist in Längsrichtung (Laufrichtung) mit einer Verstärkungseinlage 4, vorzugsweise aus Polyamid, Glasfasern oder Stahlseilen versehen.

Auf der Lauffläche 6 des Riemens 2 sind in regelmäßigen Abständen stegförmige (rippenförmige) Zähne 8 angeordnet.

Die Verzahnung ist nicht im Winkel von 90° bezogen auf die Laufrichtung des Riemens 2 angeordnet, sondern in jeweils einem gleichen Winkel α bezogen auf die Orthogonale 10, wobei sich stets ein um + α verdrehter Steg 8 mit einem um - α, d. h. entgegengesetzt verdrehten Steg 8 abwechseln, wodurch eine Art Zick-Zack-Muster entsteht. Die Stege 8 erstrecken sich über die gesamte Breite B des Riemens 2. Der Winkel α ergibt sich aus der Gleichung tan α = b'/B, wobei B die Breite des Riemens 2 ist und b' die Strecke angibt, um die der Steg 8 aus der Orthogonalen 10 verdreht ist. Der Steg 8 selbst weist eine Basisbreite b auf.

Die Grundfläche 12 der stegförmigen Zähne 8 entspricht einem Parallelogramm. Der Querschnitt 14 der Zähne 8 ist mehr oder weniger trapezförmig.

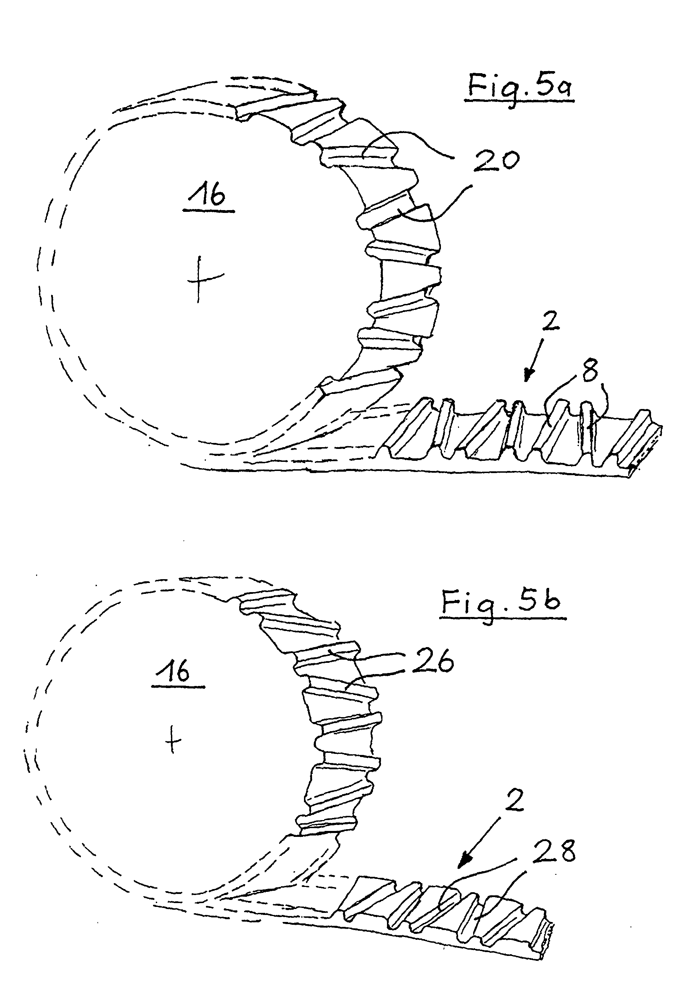

Der erfindungsgemäße Riemen 2 steht in Eingriff mit einer erfindungsgemäßen Synchronscheibe 16 (Fig. 4). Auf ihrer Lauffläche 18 weist diese Scheibe 16 Nuten 20 auf, die zu den auf dem Riemen 2 befindlichen Stegen 8 in Form und Anordnung entsprechen, d. h. die Nuten 20 sind nicht quer zur Laufrichtung 22 der Scheibe 16 angeordnet sondern ebenfalls alternierend um den gleichen Winkel ± α verdreht. Der Querschnitt 24 der Nuten 20 ist ebenfalls trapezförmig und mindestens so groß wie der Querschnitt 14 der entsprechenden Stege 8.

Das Zusammenspiel von Riemen 2 und Scheibe 16 ist in Fig. 5a dargestellt.

Bei der in Fig. 5b dargestellten geometrischen Umkehr des erfindungsgemäßen Riemen/Scheiben-Antriebs weist die Scheibe 16 stegförmige Rippen 26 bzw. Zähne auf, während auf der Lauffläche 6 des Riemens 2 entsprechende Nuten 28 vorhanden sind.

### Bezugszeichenliste

- 2: Synchronriemen
- 4: Verstärkungseinlage
- 6: Lauffläche (des Riemens)
- 8: stegförmiger (rippenförmiger) Zahn, Steg
- 10: Orthogonale zur Laufrichtung
- B: Riemenbreite
- b: Basisbreite des Stegs
- b': Verdrehstrecke
- 12: Grundfläche eines Zahnes
- 14: Querschnitt eines Zahnes
- 16: (Synchron-)Scheibe
- 18: Lauffläche (der Scheibe)
- 20: Nute
- 22: Laufrichtung der Scheibe
- 24: Querschnitt einer Nute
- 26: Scheiben-Rippe
- 28: Riemen-Nute

## Patentansprüche

1. Aus Synchronriemen (2) und Synchronscheibe(n) (16) bestehende, formschlüssige und selbstführende Antriebsanordnung
mit auf der Lauffläche (6) des Synchronriemens (2) quer zur Laufrichtung angeordneten, die gesamte Breite (B) des Synchronriemens (2) einnehmenden Stegen (8) und mit entsprechenden, auf der zugeordneten Scheibe (16) befindlichen Nuten (20), wobei
- die auf dem Riemen (2) quer zu seiner Laufrichtung angeordneten Stege (8) abwechselnd einen gleichgroßen positiven und negativen Winkel (±α) - bezogen auf die jeweilige Orthogonale (10) - bilden, und
- wobei die auf dem Riemen (2) angeordneten Stege (8) bzw. Nuten (28) zu entsprechenden, auf der zugeordneten Synchronscheibe (16) quer angeordneten Nuten (20) bzw. Stege (26) korrespondieren,
**dadurch gekennzeichnet,**
- **dass** ein Querschnitt durch die Stege (8) jeweils einem Parallelogramm und derselbe Querschnitt durch die Nuten jeweils einem gleichschenkligen Trapez entspricht, oder
- wobei ein Querschnitt durch die Stege jeweils einem gleichschenkligen Trapez und derselbe Querschnitt durch die Nuten (28) jeweils einem Parallelogramm entspricht, und
- **dass** der seitliche Versatz (b') der einzelnen Stege (8) bzw. der einzelnen Nuten bezogen auf die jeweilige Orthogonale (10) mindestens einer Zahnbreite (b) in Riemenlängsrichtung entspricht, wobei gilt: b' = B tan α.

2. Antriebsanordnung nach Anspruch 1,
**dadurch gekennzeichnet,**
**dass** die auf dem Riemen (2) angeordneten Stege (8) und die dazu korrespondierenden, auf der Scheibe (16) angeordneten Nuten (20) einen trapezförmigen Querschnitt (14 bzw. 24) aufweisen.

3. Antriebsanordnung nach Anspruch 1 oder 2,
**dadurch gekennzeichnet,**
**dass** der Synchronriemen (2) eine Verstärkungseinlage (4) aus Cord oder Gewebe aufweist.

4. Antriebsanordnung nach einem der Ansprüche 1 bis 3,
**dadurch gekennzeichnet,**
**dass** sich auf der laufseitigen und/oder auf der rückseitigen Oberfläche des Riemens (2) eine Gewebelage aus Polyamid befindet,
wobei das Polyamidgewebe auch die Oberfläche der Stege (8) bedeckt.

## Claims

1. A form-fitting and self-guiding driving arrangement, which comprises synchronous belts (2) and synchronous pulley(s) (16), said arrangement having webs (8), which are disposed on the tread surface (6) of the synchronous belt (2) transversely relative to the travel direction and occupy the entire width (B) of the synchronous belt (2), and said arrangement having corresponding grooves (20) which are situated on the associated pulley (16),
- the webs (8), which are disposed on the belt (2) transversely relative to its travel direction, forming alternately an identically dimensioned positive and negative angle (±α) - relative to the respective orthogonal (10) - and
- the webs (8) or respectively grooves (28), which are disposed on the belt (2), corresponding to appropriate grooves (20) or respectively webs (26) which are transversely disposed on the associated synchronous pulley (16),
**characterised**
- **in that** a cross-section through the webs (8) respectively corresponds to a parallelogram, and the same cross-section through the grooves respectively corresponds to an equalsided trapezium, or
- **in that** a cross-section through the webs respectively corresponds to an equalsided trapezium, and the same cross-section through the grooves (28) respectively corresponds to a parallelogram, and
- **in that** the lateral offset arrangement (b') of the individual webs (8) or respectively of the individual grooves relative to the respective orthogonal (10) corresponds to at least one tooth width (b) when viewed with respect to the longitudinal direction of the belt, b' being equal to B · tan α.

2. Driving arrangement according to claim 1, **characterised in that** the webs (8), which are disposed on the belt (2), and the grooves (20), which correspond to said webs and are disposed on the pulley (16), have a trapezoidal cross-section (14 and 24 respectively).

3. Driving arrangement according to claim 1 or 2, **characterised in that** the synchronous belt (2) includes a reinforcing member (4) formed from cord or fabric.

4. Driving arrangement according to one of claims 1 to 3, **characterised in that** a fabric ply, formed from polyamide, is situated on the tread surface and/or on the rear surface of the belt (2), the polyamide fabric also covering the surface of the webs (8).

## Revendications

1. Agencement de transmission d'entraînement positif et à guidage automatique, constitué d'une courroie de transmission synchrone (2) et d'une ou de plusieurs poulies de transmission synchrone (16),
comprenant des nervures (8) qui sont disposées sur la surface de portée(6) de la courroie de transmission synchrone (2), transversalement à la direction de circulation, et occupant la totalité de la largeur (B) de la courroie de transmission synchrone (2), et comprenant également des rainures (20) correspondantes se trouvant sur la poulie (16) associée,
l'agencement étant tel que les nervures (8) disposées sur la courroie (2) transversalement à sa direction de circulation, forment alternativement un angle positif et négatif (± α) de même valeur, par rapport à la ligne orthogonale (10) respective, et les nervures (8) ou respectivement rainures (28) disposées sur la courroie (2), correspondent à des rainures (20) et respectivement des nervures (26) associées disposées transversalement sur la poulie de transmission synchrone (16) associée,
**caractérisé en ce qu'**une section à travers les nervures (8) correspond pour chacune à un parallélogramme et la même section à travers les rainures pour chacune à un trapèze isocèle, ou une section à travers les nervures correspond pour chacune à un trapèze isocèle et la même section à travers les rainures (28) pour chacune à un parallélogramme, et **en ce que** le décalage latéral (b') des nervures individuelles (8) et respectivement des rainures individuelles par rapport à la ligne orthogonale (10) respective, correspond au moins à une largeur de dent (b) dans la direction longitudinale de la courroie, avec b' = B.tang α.

2. Agencement de transmission d'entraînement selon la revendication 1, **caractérisé en ce que** les nervures (8) disposées sur la courroie (2) et les rainures (20) correspondantes disposées sur la poulie (16) présentent une section en forme de trapèze (14 respectivement 24).

3. Agencement de transmission d'entraînement selon la revendication 1 ou 2, **caractérisé en ce que** la courroie de transmission synchrone (2) présente un insert de renfort (4) en cordage ou en un tissu.

4. Agencement de transmission d'entraînement selon l'une des revendications 1 à 3, **caractérisé en ce que** sur la surface côté portée et/ou sur la surface arrière de la courroie (2) se trouve une couche de tissu en polyamide, la couche de tissu polyamide recouvrant également la surface des nervures (8).
